# EUROPEAN PATENT APPLICATION

(11) **EP 4 297 380 A1**
(43) Date of publication of application: **27.12.2023**
(21) Application number: 21927669.8
(22) Date of filing: 09.12.2021
(51) Int. Cl.: H04M 1/02, H04M 1/18, G06F 1/16, G02F 1/153, G02F 1/161, G02F 1/163

(54) **ELECTRONIC DEVICE AND HOUSING ASSEMBLY THEREOF**

(30) Priority: 24.02.2021 CN 202110210102
(71) Applicant: GUANGDONG OPPO MOBILE TELECOMMUNICATIONS CORP., LTD., Dongguan, Guangdong 523860 (CN)
(72) Inventor: YANG, Han, Dongguan, Guangdong 523860 (CN); PENG, Mingzhen, Dongguan, Guangdong 523860 (CN)
(74) Representative: Ipside
(86) International application number: PCT/CN2021/136863
(87) International publication number: WO 2022/179245

(57) **Abstract**

The present disclosure provides an electronic device and a housing assembly thereof. The housing assembly comprises a transparent housing and an electrochromic module. The transparent housing comprises an attachment region and a through-hole region arranged adjacently, the attachment region is used for attaching the electrochromic module, and the through-hole region is used for forming a light through hole. A wire leading-out terminal of the electrochromic module is located between the attachment region and the through-hole region. According to the electronic device and the housing assembly thereof provided by embodiments of the present disclosure, by arranging the wire leading-out terminal of the electrochromic module between the attachment region and the through-hole region of the transparent housing, the width of a black side at the periphery of the housing assembly can be reduced, thereby improving the overall appearance expressiveness of the housing.

## Description

### TECHNICAL FIELD

The present disclosure relates to the technical field of color-changeable housing structures of electronic devices, in particular to an electronic device and a housing assembly thereof.

### BACKGROUND

At present, a housing of an electronic product such as a smart phone includes a protective glass cover plate or a plastic plate with a built-in decorative film. A color or a pattern of the housing is relatively unchangeable, and an effect of a variety of color changes cannot be implemented, and an appearance is not expressive. In addition, the housing has a single function, and only plays a role of protecting the smart phone. However, the housing cannot implement a dynamic effect with the change of the smart phone, and there is a lack of interaction between the smart phone and a user.

In some solutions, a color-changeable decorative film for a mobile phone is proposed based on an electrochromic technology. However, when the color-changeable decorative film is applied to a housing of the mobile phone, black edges of a periphery of the housing are wide and an overall appearance of the housing is not expressive.

### SUMMARY

A housing assembly is provided in the present disclosure and includes a transparent housing and an electrochromic module. The transparent housing includes an attachment region and a through-hole region arranged adjacent to the attachment region. The through-hole region defines a light-transmission hole. The electrochromic module is attached to the attachment region. A wire leading-out terminal of the electrochromic module is arranged between the attachment region and the through-hole region.

In addition, an electronic device is provided in the present disclosure and includes a display screen module, a control circuit board, and a housing assembly. The housing assembly includes an attachment region and a through-hole region arranged adjacent to the attachment region. The through-hole region defines a light-transmission hole. The electrochromic module is attached to the attachment region and includes a wire leading-out terminal. A wire leading-out terminal of the electrochromic module is arranged between the attachment region and the through-hole region. The display screen module is engaged with the transparent housing to form an accommodation space, the control circuit board and the electrochromic module are arranged in the accommodation space, and the control circuit board is electrically connected to the wire leading-out terminal and configured to control the electrochromic module to change color.

In the housing assembly and the electronic device provided in some embodiments of the present disclosure, since the wire leading-out terminal of the electrochromic module is arranged between the attachment region and the through-hole region of the transparent housing, the width of the black edge of the outer periphery of the housing assembly may be reduced, thereby improving the overall appearance of the housing.

### BRIEF DESCRIPTION OF THE DRAWINGS

In order to make the technical solution described in embodiments of the present disclosure more clearly, the drawings used for description of embodiments will be described. Apparently, the drawings in the following description only illustrate some embodiments of the present disclosure. For those skilled in the art, other drawings may be acquired according to the drawings without any creative work.
FIG. 1 is a structural schematic view of a housing assembly in the related art.
FIG. 2 is a partially enlarged structural schematic view of the housing assembly shown in FIG. 1.
FIG. 3 is an overall structural schematic view of the housing assembly according to some embodiments of the present disclosure.
FIG. 4 is a partially enlarged structural schematic view of a housing assembly according to some embodiments of the present disclosure.
FIG. 5 is a structural schematic view of a transparent housing shown in FIG. 3.
FIG. 6 is a cross-sectional structural schematic view of the housing assembly along an A-A direction shown in FIG. 3.
FIG. 7 is a structural schematic view of a laminated partial structure of an electrochromic module according to some embodiments of the present disclosure.
FIG. 8 is a cross-sectional structural schematic view of a housing assembly according to some embodiments of the present disclosure.
FIG. 9 is a cross-sectional structural schematic view of a housing assembly according to some embodiments of the present disclosure.
FIG. 10 is a partial enlarged structural schematic view of a housing assembly according to some embodiments of the present disclosure.
FIG. 11 is a partial enlarged structural schematic view of a housing assembly according to some embodiments of the present disclosure.
FIG. 12 is an enlarged structural schematic view of a region C of the housing assembly shown in FIG. 3.
FIG. 13 is a partial cross-sectional structural schematic view along a B-B direction shown in FIG. 12.
FIG. 14 is a partial cross-sectional structural schematic view along a D-D direction shown in FIG. 4.
FIG. 15 is a structural schematic view of a housing assembly according to some embodiments of the present disclosure.
FIG. 16 is a partial cross-sectional structural schematic view of a housing assembly according to some embodiments of the present disclosure.
FIG. 17 is a cross-sectional structural schematic view of an electronic device according to some embodiments of the present disclosure.
FIG. 18 is a schematic block diagram of an electronic device according to some embodiments of the present disclosure.

### DETAILED DESCRIPTION

The present disclosure will be further described in detail with reference to the drawings and some embodiments. In particular, the following embodiments are only for the purpose of describing the present disclosure, but do not limit the scope of the present disclosure. Similarly, the described embodiments are only a part of embodiments of the present disclosure, and not all embodiments. All other embodiments acquired by those skilled in the art without the creative work are all within the scope of the present disclosure.

"Embodiments" mentioned in the present disclosure means that specific features, structures, or characteristics described in conjunction with embodiments may be included in at least one embodiment of the present disclosure. The term appearing in various positions of the description does not necessarily refer to a same embodiment, and does not necessarily refer to an independent or alternative embodiment that is mutually exclusive with other embodiments. Those skilled explicitly and implicitly understand that the embodiments described in the present disclosure can be combined with other embodiments.

An "electronic device" (or called a "terminal") described herein includes, but is not limited to, an apparatus receiving/transmitting communication signals through a cable line (e.g., a public switched telephone network (PSTN), a digital subscriber line (DSL), a digital cable, a direct cable connection, and/or another data connection/network) and/or through a wireless interface (e.g., a cellular network, a wireless local area network (WLAN), a digital television network such as a digital video broadcast-handheld (DVB-H) network, a satellite network, an amplitude modulation-frequency modulation (AM-FM) broadcast transmitter, and/or another communication terminal). A communication terminal communicating through a wireless interface may be called a "wireless communication terminal", a "wireless terminal" or a "mobile terminal". The mobile terminal includes, but is not limited to, a satellite or a cellular telephone; a personal communication system (PCS) terminal capable of combining cellular radiotelephone with capabilities including data processing, facsimile, and data communication; a personal digital assistant (PDA) including a radiotelephone, a pager, an Internet/an intranet access, a web browser, a notebook, a calendar, and/or a GPS receiver; a conventional laptop and/or palm receiver; or other electronic apparatuses including a radiotelephone transceiver. A mobile phone is an electronic device including a cellular communication module.

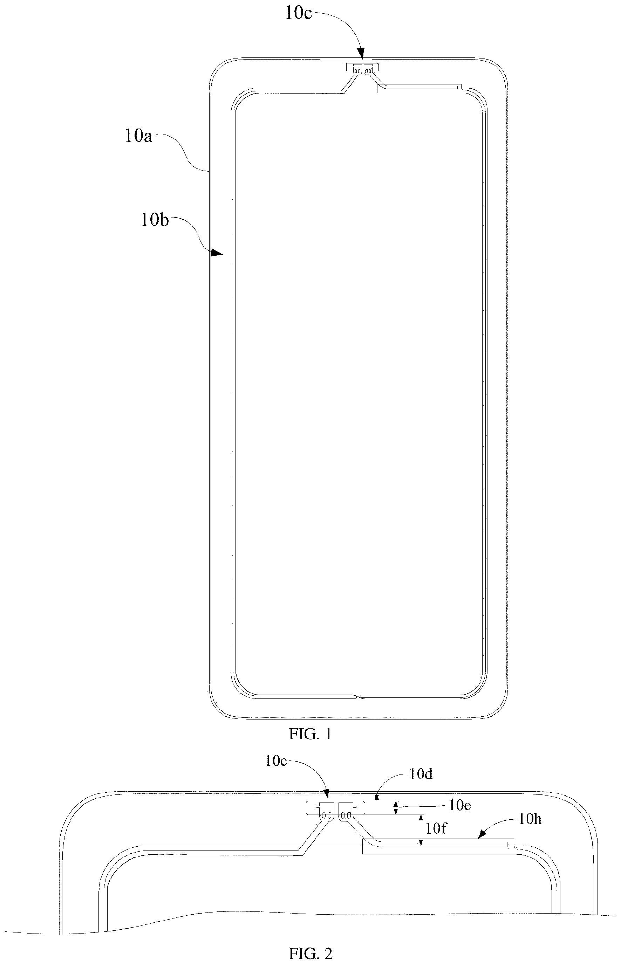

As shown in FIGS. 1 and 2, FIG. 1 is a structural schematic view of a housing assembly in the related art, and FIG. 2 is a partially enlarged structural schematic view of the housing assembly shown in FIG. 1.A first bonding region 10c of an electrochromic component 10b (i.e., a wire leading-out terminal of the electrochromic component 10b) on a rear housing 10a of an electronic device is arranged at an edge of the electronic device. A foam attaching region 10d (configured to attach the foam thereto and attach to a middle frame of the electronic device), a second bonding region 10e (configured to bind a flexible printed circuit board), an adhesive-frame encapsulating region or sealing region 10f (configured to encapsulate or seal an adhesive frame to prevent water vapor from entering the electronic device) and a jointing and conduction region 10h for upper and lower sheets are arranged near the first bonding region. Detailed structures of the second bonding region 10e, the adhesive-frame encapsulating region 10f, and the jointing and conduction region 10h will be introduced below. The above four regions together form a color unchangeable region of the electrochromic component. After the electrochromic component is attached to the rear housing made of glass, the edge of the rear housing needs to be printed with ink to shield the color unchangeable region, and the shielded region is called "black edge region". Due to superposition of the above regions, the "black edge region" having unchangeable color has a large area, thereby affecting an appearance of the rear housing of the electronic device.

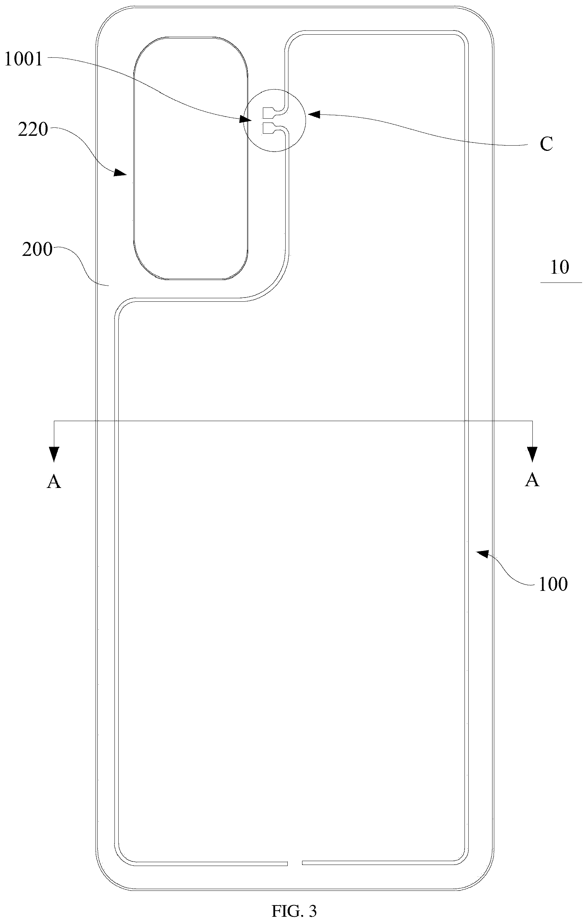

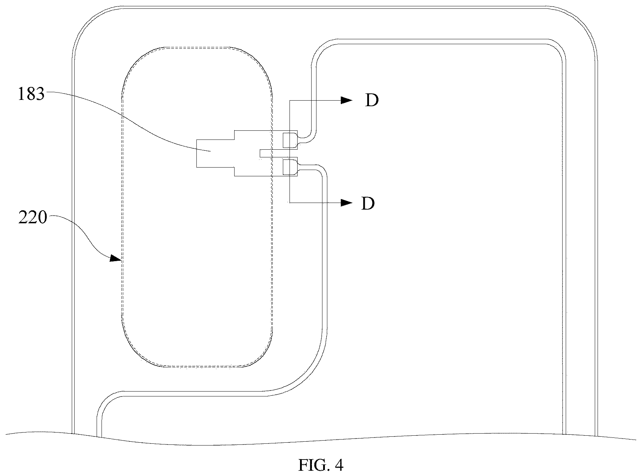

In view of the above technical problem, some embodiments of the present disclosure provide a housing assembly. As shown in FIGS. 3 and 4, FIG. 3 is an overall structural schematic view of the housing assembly according to some embodiments of the present disclosure, and FIG. 4 is a partially enlarged structural schematic view of a housing assembly according to some embodiments of the present disclosure. It should be noted that the housing assembly in some embodiments of the present disclosure may be applied to an electronic device. The electronic device may include a mobile phone, a tablet computer, a laptop computer, or a wearable device, etc. The housing assembly 10 may include a transparent housing 200 and an electrochromic module 100. It should be noted that the terms "including" and "having", and any modification thereof are intended to cover un-exclusive inclusion. For example, a process, method, system, product, or device that includes a series of operations or units is not limited to the listed operations or units, but optionally also includes operations or units not listed, or optionally includes other operations or assemblies inherent to these processes, methods, products, or devices.

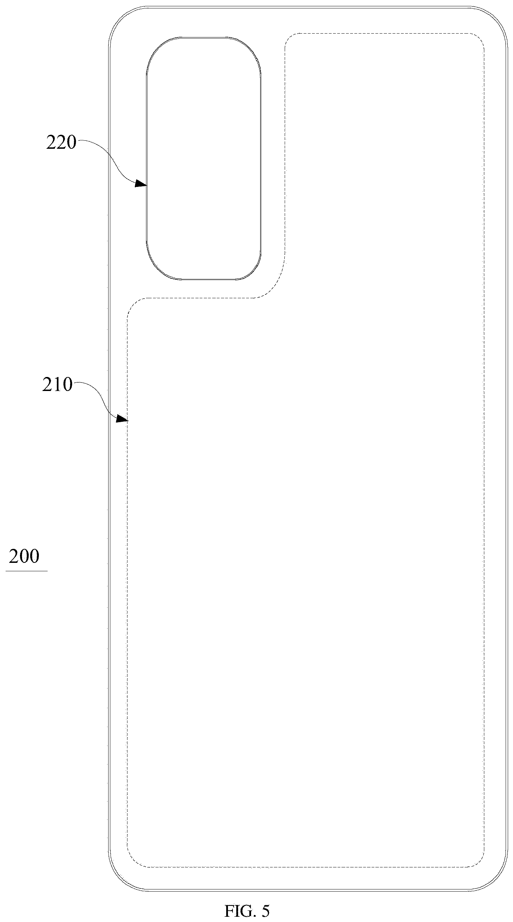

As shown in FIG. 5, FIG. 5 is a structural schematic view of a transparent housing shown in FIG. 3. In some embodiments of the present disclosure, the transparent housing 200 includes an attachment region 210 (a region bounded by broken lines in FIG. 5) and a through-hole region 220 arranged adjacent to the attachment region 210. The attachment region 210 is configured to attach to the electrochromic module 100. The through-hole region 220 is configured to define a light-transmission hole of a functional component (such as a camera, a sensor, or a flash lamp, etc.). The through-hole region 220 may be in a form of a through hole, and may be configured to mount a camera decorative member. A wire leading-out terminal 1001 of the electrochromic module 100 is located between the attachment region 210 and the through-hole region 220. The transparent housing 200 may be made of glass or transparent resin. The transparent housing 200 in some embodiments of the present disclosure may be a rear cover of the electronic device, i.e., a battery cover.

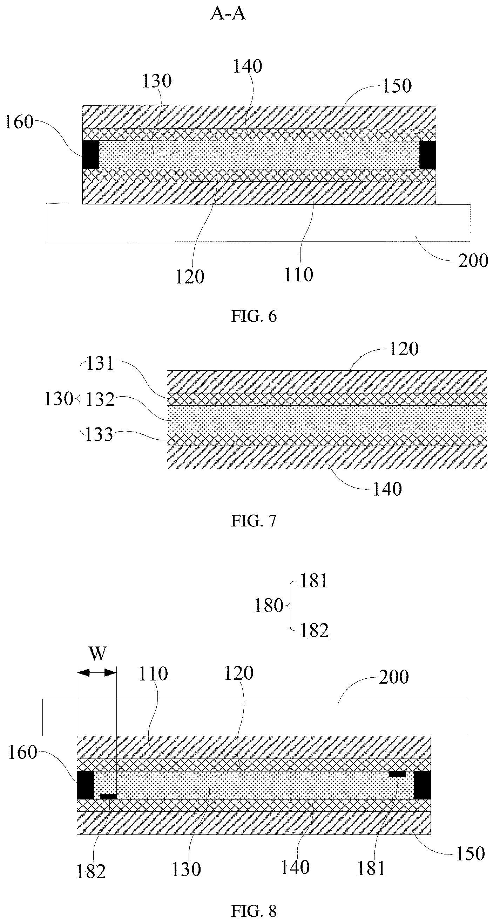

As shown in FIGS. 3 and 6, FIG. 6 is a cross-sectional structural schematic view of the housing assembly along an A-A direction shown in FIG. 3. In some embodiments, the electrochromic module 100 includes a first substrate 110, a first conductive layer 120, a color-changeable material layer 130, a second conductive layer 140, and a second substrate 150 which are sequentially laminated or stacked on one another. The first conductive layer 120 and the second conductive layer 140 are connected to the wire leading-out terminal 1001 respectively. The wire leading-out terminal 1001 is configured to bind to the flexible printed circuit board, thereby being electrically connected to a control circuit board.

In some embodiments, an adhesive frame 160 is arranged around or enclosed around the color-changeable material layer 130, and is attached or adhered to the first conductive layer 120 and the second conductive layer 140, respectively. In some embodiments, the adhesive frame 160 may be attached or adhered to the first substrate 110 and the second substrate 150. In some embodiments, the adhesive frame 160 may be arranged at a periphery of edges of the first substrate 110, the first conductive layer 120, the color-changeable material layer 130, the second conductive layer 140, and the second substrate 150. A position of the adhesive frame 160 is not limited. In some embodiments, the adhesive frame 160 may include or be made of glue.

In some embodiments, the first substrate 110 and the second substrate 150 may include or be made of a flexible transparent resin material, such that an overall structure of the electrochromic module 100 is flexible and bendable. The first substrate 110 and the second substrate 150 are configured to support and protect an internal structure of the electrochromic module 100. In some embodiments, the first substrate 110 and the second substrate 150 may include or be made of polybutylene terephthalate (PET or PEIT, commonly known as polyester resin, a polycondensate of p-phthalic acid and ethylene glycol), poly (methyl methacrylate) (PMMA, also called acrylic or organic glass), polycarbonate (PC, a polymer containing carbonate group in molecular chains), or polyimide (PI), etc. Within the understanding of those skilled in the art, the first substrate 110 and the second substrate 150 may use many other types of materials, which will not be listed and detailed herein. A method for forming the first conductive layer 120 and the second conductive layer 140 may be physical vapor deposition (PVD) including vacuum evaporation, sputtering, and ion plating (hollow cathode ion plating, hot cathode ion plating, arc ion plating, reactive ion plating, radio frequency ion plating, or direct current discharge ion plating), etc.

Thicknesses of the first conductive layer 120 and the second conductive layer 140 may be in a range between 100 nm and 300 nm, such as 100 nm, 120 nm, 150 nm, 200 nm, 280 nm, or 300 nm, etc. The first conductive layer 120 and the second conductive layer 140 may include or be made of a transparent conductive material. The transparent conductive material may be tin-doped indium oxide (ITO, indium tin oxide), aluminum-doped zinc oxide (AZO), fluorine-doped tin oxide (FTO), or graphene film, etc. In order to enable the electrochromic module 100 to have a fast color-changing speed, sheet resistance of the first conductive layer 120 and the second conductive layer 140 may be set as 10-150 ohms, such as 10 ohms, 20 ohms, 40 ohms, 50 ohms, 80 ohms, 100 ohms, 120 ohms, 150 ohms or other values.

FIG. 7 is a structural schematic view of a laminated partial structure of an electrochromic module according to some embodiments of the present disclosure. As shown in FIG. 7, the color-changeable material layer 130 further includes a sub-layer structure. As shown in FIG. 7, the color-changeable material layer 130 includes an electrochromic layer (i.e., an EC layer) 131, a dielectric layer 132, and an ion storage layer (i.e., an IS layer) 133, which are sandwiched between the first conductive layer 120 and the second conductive layer 140 and which are sequentially laminated or stacked on one another. In some embodiments, the EI layer 131 may include or be made of an organic polymer (including polyaniline, or polythiophene, etc.), an inorganic material (including a Prussian blue, or a transition metal oxide such as tungsten trioxide, etc.), or an organic small molecule (such as viologen), etc. In some embodiments of the present disclosure, taking the EI layer 131 as an organic polymer for example, the EI layer 131 may be made of solid or gelled material. In some embodiments, the IS layer 133 and the dielectric layer 132 may be formed on the conductive layer by blade coating, the EI layer 131 (the EI layer 131 is the organic polymer or inorganic material mentioned above) may be formed by blade coating, dripping, or the like, and detailed technical features of this part are within the understanding of those skilled in the art and will not be described in detailed herein. It should be noted that terms "first", "second" and "third" in embodiments of the present disclosure are only used for description purposes and cannot be understood as indicating or implying relative importance or implicitly indicating the number of technical features indicated. Thus, features defined as "first", "second", and "third" may explicitly or implicitly include at least one of the features. In embodiments of the present disclosure, "a plurality of" means at least two, such as two, or three, etc., unless otherwise specifically defined.

In the housing assembly provided in some embodiments of the present disclosure, since the wire leading-out terminal of the electrochromic module is arranged between the attachment region and the through-hole region of the transparent housing, the width of the black edge of the outer periphery of the housing assembly may be reduced, thereby improving the overall appearance of the housing.

As shown in FIG. 8, FIG. 8 is a cross-sectional structural schematic view of a housing assembly according to some embodiments of the present disclosure. Different from previous embodiments, the electrochromic module 100 in some embodiments further includes a metal wire 180 including a first metal wire 181 and a second metal wire 182. The first metal wire 181 is connected to the first conductive layer 120, the second metal wire 182 is connected to and the second conductive layer 140, and the metal wires (including the first metal wire 181 and the second metal wire 182) is connected to the wire leading-out terminal 1001.

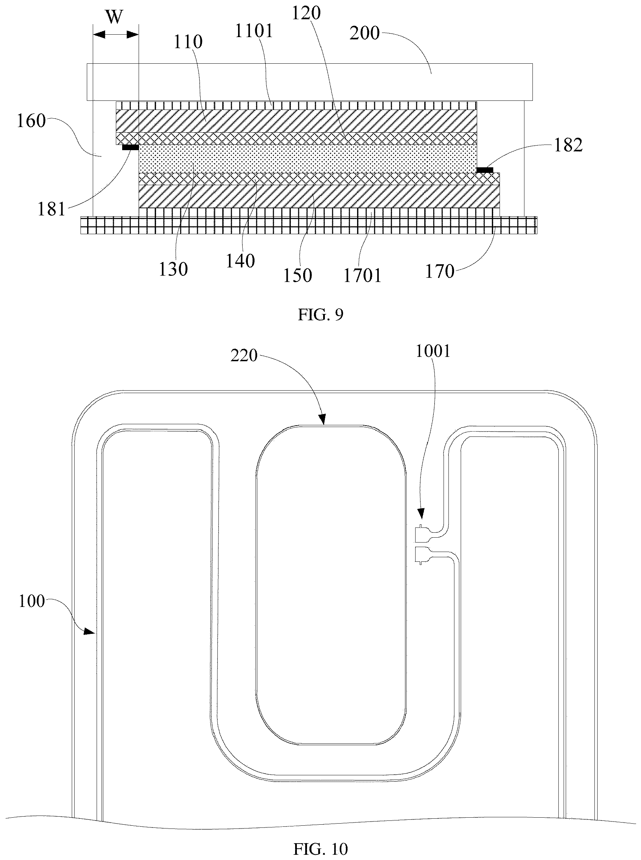

As shown in FIG. 9, FIG. 9 is a cross-sectional structural schematic view of a housing assembly according to some embodiments of the present disclosure. Different from previous embodiments, the electrochromic module 100 in some embodiments further includes a water-oxygen barrier layer 170 arranged on a side surface of the second substrate 150 away from the second conductive layer 140. In some embodiments, the water-oxygen barrier layer 170 may be attached to the side surface of the second substrate 150 away from the second conductive layer 140. An area of the water-oxygen barrier layer 170 may be larger than an area of the second substrate 150, and the water-oxygen barrier layer 170 may be attached or adhered to the side surface of the second substrate 150 away from the second conductive layer 120 and an end surface of the adhesive frame 160. In some embodiments, opposite ends of the adhesive frame 160 are attached or adhered to the transparent housing 200 and the water-oxygen barrier layer 170, respectively. The water-oxygen barrier layer 170 may be attached or adhered to the second substrate 150 through an optical clear adhesive (OCA) layer 1701. The water-oxygen barrier layer 170 may be made of aluminum oxide, resin, or the like.

In some embodiments, the water-oxygen barrier layer 170 may include a substrate and a water-oxygen barrier material arranged or plated on a surface the substrate. The substrate may include or be made of a flexible transparent resin material including PET, PC, or PI, etc. The water-oxygen barrier material may be a dense metal oxide layer, an inorganic nonmetallic layer, or a composite layer including organic material and an inorganic material. For examples, the composite layer may be a laminated composite structure including aluminum oxide, silicon oxide, or a plurality of materials, etc. Further, it should be noted that, in some embodiments, an appearance film layer may be arranged on the substrate of the water-oxygen barrier layer 170, and the appearance film layer may include one or more of an ink layer, an optical coating layer, a texture layer, and the like, which is not limited. The appearance film layer enriches a display effect of the housing assembly.

In some embodiments, the water-oxygen barrier layer 170 may be a flexible substrate plated with a water-oxygen barrier material. The water-oxygen barrier layer 170 may have a water vapor transmission rate (WVTR)<1×10⁻²g/m²/day. In some embodiments of the present disclosure, the water vapor transmission direction of the water-oxygen barrier layer 170 is a physical characterization of water vapor penetrating through the water-oxygen barrier layer 170 along a thickness direction from one side surface of the water-oxygen barrier layer 170 to the other opposite side surface of the water-oxygen barrier layer 170. The transparent housing 200, the first substrate 110 (the transparent housing 200 is attached or adhered to the first substrate 110 through the OCA layer 1101), the adhesive frame 160, and the water-oxygen barrier layer 170 jointly or cooperatively form an annular enclosure, such that an electrochromic material of a core layer of an electrochromic module 100 is protected to prevent water and oxygen from entering.

Further, as shown in FIG. 9, difference from the previous embodiments, in some embodiments shown in FIG. 9, the first metal wire 181 and the second metal wire 182 are embedded in the adhesive frame 160, and the first metal wire 181 and the second metal wire 182 are arranged in the adhesive frame 160. Compared with the above embodiments, the metal wires in some embodiments are integrated in the adhesive frame 160 (that is, a black edge region of the adhesive frame 160 and a black edge region of the metal wires are overlapped with each other), so as to further reduce a width W of the black edge. Further, the metal wires (the first metal wire 181 and the second metal wire 182) are integrated in the adhesive frame 160, such that it is possible to reduce the occurrence of contact between the metal wires and the electrochromic (material) layer 130 to reduce chemical corrosion. In some embodiments, one of the first metal routing and the second metal routing may be embedded in the adhesive frame, and the detailed structural features will not be repeated here. It should be noted that when directional indications (such as up, down, left, right, front, back...) used in embodiments of the present disclosure are only used to explain relative position relationship, motion situation, etc. between components in a specific posture (as shown in the drawings). When the specific posture changes, the directional indication also changes accordingly.

Further, as shown in FIGS. 3 to 5, the through-hole region 220 in some embodiments may be substantially in a shape of rounded rectangle, and the attachment region 210 is arranged around or surrounds two sides of the through-hole region 220. As shown in FIG. 10, FIG. 10 is a partial enlarged structural schematic view of a housing assembly according to some embodiments of the present disclosure. In some embodiments of the present disclosure, the attachment region 210 (i.e., the electrochromic module 100) is arranged around or surrounds three sides of the through-hole region 220. In some embodiments, the attachment region 210 is not arranged around or surrounds but is arranged adjacent to the through-hole region 220, and the detailed structural features are not illustrated in drawings.

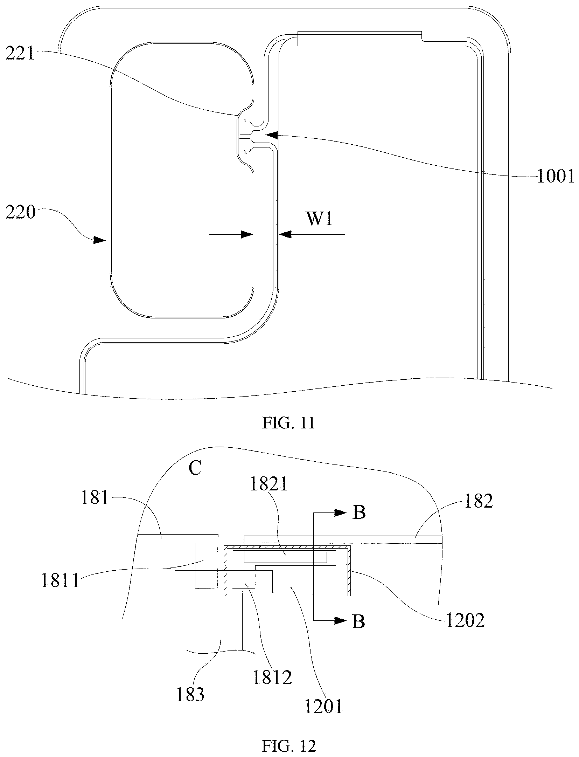

As shown in FIG. 11, FIG. 11 is a partial enlarged structural schematic view of a housing assembly according to some embodiments of the present disclosure. Different from the above embodiments, in some embodiments, the transparent housing 200 includes a protrusion 221 arranged between the attachment region 210 and the through-hole region 220 and extending toward an inner side of the through-hole region 220. The wire leading-out terminal 1001 of the electrochromic module 100 is arranged corresponding to and facing the protrusion 221. In some embodiments, the structure of the protrusion 221 may be structurally matched with that of a camera module (i.e., a functional component), the protrusion 221 is served as the bonding region and does not occupy a space of the color-changeable region (equivalent to reducing a width of the color unchangeable region between the attachment region and the through-hole region), that is, the width W1 of the black edge located at a right side of the through-hole region in FIG. 11 is not affected.

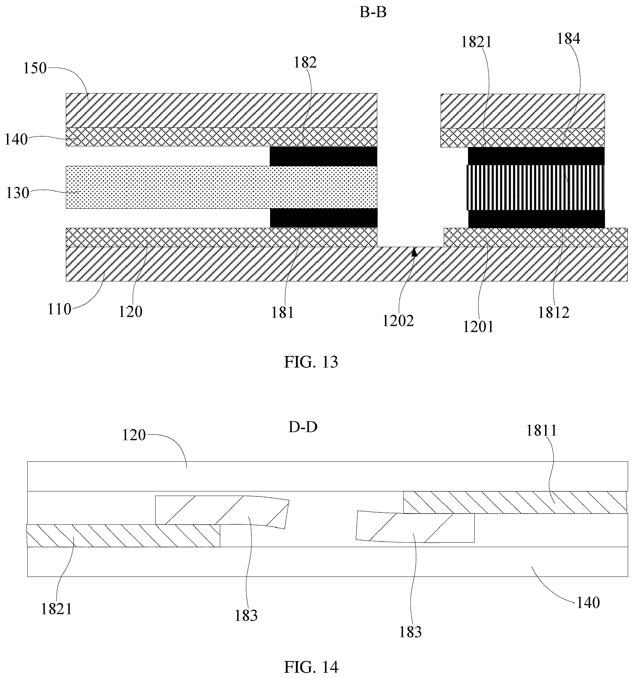

As shown in FIGS. 12 and 13, FIG. 12 is an enlarged structural schematic view of a region C of the housing assembly shown in FIG. 3, and FIG. 13 is a partial cross-sectional structural schematic view along a B-B direction shown in FIG. 12. A structure shown in FIG. 12 illustrates a technical solution of an electrochromic module in which the wiring is arranged at a single side according to some embodiments of the present disclosure. The second metal wire 182 is connected to a second wire leading-out terminal 1812 on one side of the first substrate 110 through a connecting end 1821 (in some embodiments, the connecting end 1821 is connected to the second wire leading-out terminal 1812 through a conductive material 184). With this structure, a first wire leading-out terminal 1811 and the second wire leading-out terminal 1812 may be located on the same side of the first conductive layer 120and arranged in a coplanar manner (i.e., arranged on a same plane) (both of the first wire leading-out terminal 1811 and the second wire leading-out terminal 1812 are arranged on the first conductive layer 120), and a flexible printed circuit board 183 is connected to the first wire leading-out terminal 1811 and the second wire leading-out terminal 1812 located on the same side, thereby bonding the electrochromic module. A region labeled with 1202 in FIGS. 12 and 13 is a partition region 1202 on the first conductive layer 120, such that an island structure 1201 is isolated from other regions or portions of the first conductive layer 120 (non-conductive state).

In some embodiments of the present disclosure, the flexible printed circuit board may also be bonded (wiring) on two sides, that is, the upper and lower conductive layers (or the metal wires on the two sides) are connected to the flexible printed circuit board 183, and the metal wire on one side is not required to be jointed and conducted to the other side, that is, two sides are bonded to the flexible printed circuit board 183. As shown in FIGS. 4 and 14, FIG. 14 is a partial cross-sectional structural schematic view along a D-D direction shown in FIG. 4. The flexible printed circuit board 183 in some embodiments is substantially in a shape of "Y" (in some embodiments, the flexible printed circuit board 183 may also be in a shape of "T", as long as the flexible printed circuit board 183 has three ends). Two ends for bonding of the flexible printed circuit board 183 having the Y-shaped structure in some embodiments are connected to the first wire leading-out terminal 1811 and the second wire leading-out terminal (i.e., the connecting end 1821 shown in FIG. 14) respectively, and the first wire leading-out terminal and the second wire leading-out terminal are arranged in a non-coplanar manner. In this designed structure, the jointing and conduction region for upper and lower sheets (i.e. the jointing and conduction region 10h shown in FIG. 2) may not be arranged or may be removed to further reduce the width of the black edge. A trailing end of the flexible printed circuit board 183 having the Y-shaped structure is configured to be connected to a control circuit board (not shown in FIG. 14).

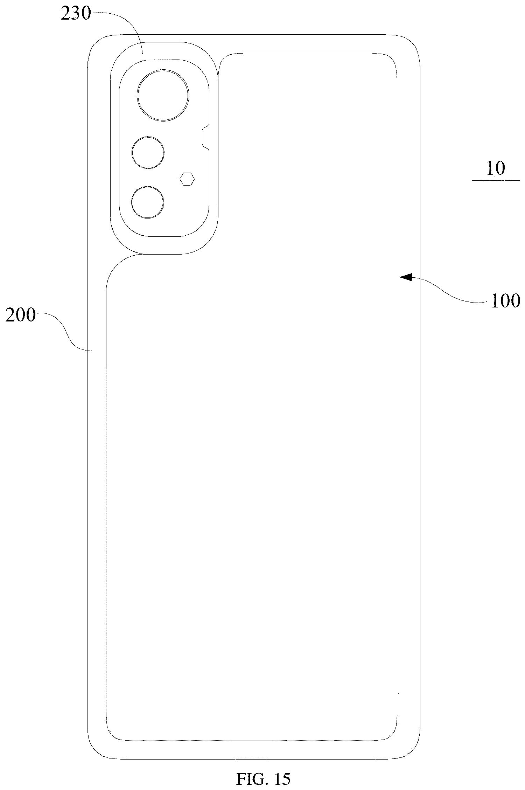

As shown in FIG. 15, FIG. 15 is a structural schematic view of a housing assembly according to some embodiments of the present disclosure. The housing assembly 10 further includes a camera decorative member 230. At least a portion of the camera decorative member 230 may include or be made of a metal material. The camera decorative member 230 is embedded in the through-hole region 220. The flexible printed circuit board 183 of the electrochromic module 100 and the metal portion of the camera decorative member 230 are grounded and conductively connected to each other. The camera decorative member 230 with the metal portion is served as a grounding component for the electrochromic module 100. The electrochromic module 100 is connected to the camera decorative member 230 to implement electrostatic discharge of the electrochromic module 100, thereby implementing electrostatic protection of the electrochromic module 100, reducing the occurrence of electrostatic breakdown, and improving the reliability of the circuit of the electrochromic module.

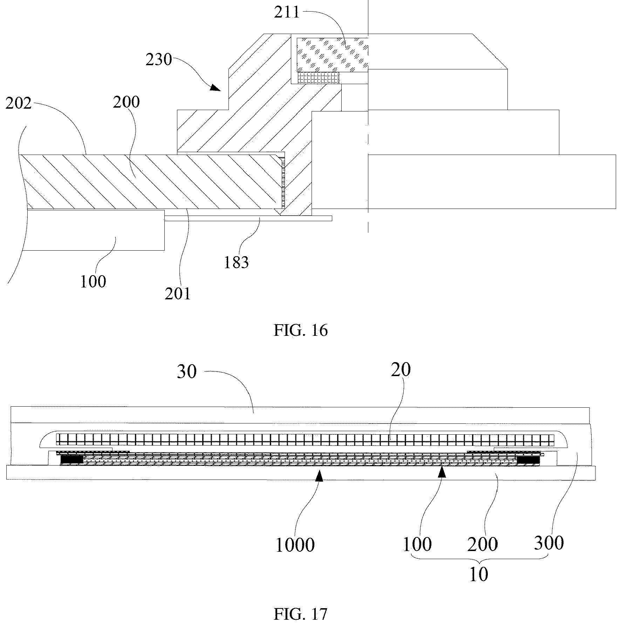

As shown in FIG. 16, FIG. 16 is a partial cross-sectional structural schematic view of a housing assembly according to some embodiments of the present disclosure. The transparent housing 200 includes a first surface 201 and a second surface 202 arranged opposite to the first surface 201. The electrochromic module 100 is attached to the first surface 201. The camera decorative member 230 penetrates the transparent housing 200, and two opposite sides of the camera decorative member 230 are exposed to the first surface 201 and the second surface 202 of the transparent housing 200, respectively. The electrochromic module 100 is connected to one side of the camera decorative member 230 exposed to the first surface 201 of the transparent housing 200 through the flexible printed circuit board 183. The reference numeral 211 shown in FIG. 16 may be used to indicate a lens.

Some embodiments of the present disclosure also provide an electronic device. As shown in FIGS. 15 and 17, FIG. 17 is a cross-sectional structural schematic view of an electronic device according to some embodiments of the present disclosure. The electronic device in some embodiments includes a display screen module 30, the housing assembly 10 (as descried in any one of the above embodiments), and a control circuit board 20. The housing assembly 10 may include the electrochromic module 100, the transparent housing 200, and a middle frame 300. It should be noted here that the embodiments of the present disclosure only describe the structure of the electronic device including the middle frame. In some embodiments, the electronic device may not include the middle frame, that is, the rear cover (transparent housing 200) of the housing assembly 200 may be directly cooperated with the display screen module 30, which is not limited here. The transparent housing 200 in some embodiments may include or be made of a transparent material such as glass or resin.

In some embodiments, the display screen module 30 is arranged on one side of the middle frame 300, and the electrochromic module 100 and the transparent housing 200 of the housing assembly 10 are arranged on opposite other side of the middle frame 300. The display screen module 300 is engaged or cooperated with the transparent housing 200 to form or define an accommodation space 1000, and the control circuit board 20 and the electrochromic module 100 are arranged in the accommodation space 1000. The electrochromic module 100 is attached to an inner surface of the transparent housing 200. The control circuit board 20 is coupled to the electrochromic module 100, and is configured to control the electrochromic module 100 to change color. Detailed technical features of structures of other parts of the electronic device are within the understanding of those skilled in the art, and will not be repeated here.

In the electronic device provided in some embodiments of the present disclosure, since the wire leading-out terminal of the electrochromic module of the housing assembly is arranged between the attachment region and the through-hole region of the transparent housing, the width of the black edge of the outer periphery of the housing assembly may be reduced, thereby improving the overall appearance of the housing.

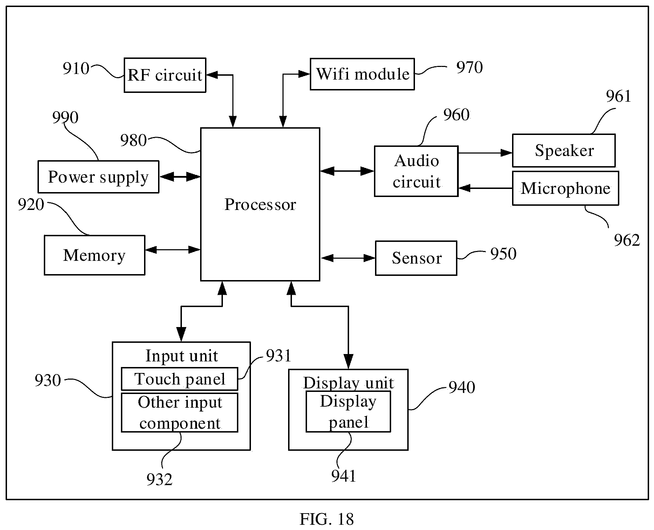

As shown in FIG. 18, FIG. 18 is a schematic block diagram of an electronic device according to some embodiments of the present disclosure. The electronic device may be a mobile phone, a tablet computer, a laptop computer, or a wearable device, etc. Some embodiments of the present disclosure take a mobile phone as an example. The structure of the electronic device may include a radio frequency (RF) circuit 910, a memory 920, an input unit 930, a display unit 940 (i.e., the display screen module 30 in the above embodiments), a sensor 950, an audio circuit 960, a Wifi module 970, a processor 980 (i.e., the control circuit board 20 in the above embodiments), a power supply 990, and the like. The RF circuit 910, the memory 920, the input unit 930, the display unit 940, the sensor 950, the audio circuit 960, and the Wifi module 970 are connected to the processor 980. The power supply 990 is configured to supply power to the entire electronic device 10.

The RF circuit 910 is configured to receive and transmit signals. The memory 920 is configured to store data instruction information. The input unit 930 is configured to input information, and may include a touch panel 931 and other input component 932 such as operating keys. The display unit 940 may include a display panel 941 and the like. The sensor 950 may include an infrared sensor, a laser sensor, and the like, and may be configured to detect a user proximity signal, a distance signal, and the like. A speaker 961 and a microphone 962 are connected to the processor 980 through the audio circuit 960, and are configured to transmit and receive sound signals, respectively. The Wifi module 970 is configured to receive and transmit Wifi signals. The processor 980 is configured to process data information of the electronic device. The specific structural features of the electronic device may refer to the relevant description of the above embodiments, and no detailed introduction will be made here. The above are only some embodiments of the present disclosure and do not limit the scope of the present disclosure. Any equivalent apparatus or equivalent process transformation made by using the description and the drawings of the present disclosure, or directly or indirectly applied to other relevant technical fields, are similarly included in the protection scope of the present disclosure.

## Claims

1. A housing assembly, **characterized by** comprising:
a transparent housing, comprising an attachment region and a through-hole region arranged adjacent to the attachment region, wherein the through-hole region defines a light-transmission hole; and
an electrochromic module, attached to the attachment region, wherein a wire leading-out terminal of the electrochromic module is arranged between the attachment region and the through-hole region.

2. The housing assembly as claimed in claim 1, wherein the transparent housing further comprises a protrusion arranged between the attachment region and the through-hole region and extending toward an inner side of the through-hole region;
wherein the wire leading-out terminal of the electrochromic module is arranged facing the protrusion.

3. The housing assembly as claimed in claim 2, wherein at least part of the attachment region is arranged around the through-hole region.

4. The housing assembly as claimed in claim 1, wherein the electrochromic module comprises a first substrate, a first conductive layer, a color-changeable material layer, a second conductive layer, and a second substrate sequentially laminated on one another, and the first conductive layer and the second conductive layer are connected to the wire leading-out terminal respectively.

5. The housing assembly as claimed in claim 4, wherein the electrochromic module further comprises a metal wire, and the metal wire comprises a first metal wire and a second metal wire; the first metal wire is connected to the first conductive layer, and the second metal wire is connected to the second conductive layer; the wire leading-out terminal comprises a first wire leading-out terminal connected to the first metal wire and a second wire leading-out terminal connected to the second metal wire.

6. The housing assembly as claimed in claim 5, wherein the electrochromic module further comprises an adhesive frame arranged around the color-changeable material layer.

7. The housing assembly as claimed in claim 6, wherein at least one of the first metal wire and the second metal wire is embedded in the adhesive frame.

8. The housing assembly as claimed in claim 5, wherein the electrochromic module further comprises a flexible printed circuit board connected to the first wire leading-out terminal and the second wire leading-out terminal, and the first wire leading-out terminal and the second wire leading-out terminal are arranged in a non-coplanar manner.

9. The housing assembly as claimed in claim 8, further comprising a camera decorative member embedded in the through-hole region, at least a portion of the camera decorative member being made of metal; wherein the flexible printed circuit board and the metal portion of the camera decorative member are grounded and conductively connected to each other.

10. The housing assembly as claimed in claim 1, further comprising: a camera decorative member; wherein the transparent housing comprises a first surface and a second surface arranged opposite to each other;
wherein the electrochromic module is attached to the first surface, the camera decorative member penetrates the transparent housing and is embedded in the through-hole region, two opposite sides of the camera decorative member are exposed to the first surface and the second surface respectively, and the electrochromic module is connected to one side of the camera decorative member exposed to the first surface through the flexible printed circuit board.

11. An electronic device, **characterized by** comprising:
a display screen module;
a control circuit board; and
a housing assembly, comprising:
a transparent housing, comprising an attachment region and a through-hole region arranged adjacent to the attachment region, wherein the through-hole region defines a light-transmission hole; and
an electrochromic module, attached to the attachment region, wherein a wire leading-out terminal of the electrochromic module is arranged between the attachment region and the through-hole region;
wherein the display screen module is engaged with the transparent housing to form an accommodation space, the control circuit board and the electrochromic module are arranged in the accommodation space, and the control circuit board is electrically connected to the wire leading-out terminal and configured to control the electrochromic module to change color.

12. The electronic device as claimed in claim 11, wherein the transparent housing further comprises a protrusion arranged between the attachment region and the through-hole region and extending toward an inner side of the through-hole region;
wherein the wire leading-out terminal of the wire leading-out terminal is arranged facing the protrusion.

13. The electronic device as claimed in claim 12, wherein at least part of the attachment region is arranged around the through-hole region.

14. The electronic device as claimed in claim 11, wherein the electrochromic module comprises a first substrate, a first conductive layer, a color-changeable material layer, a second conductive layer, and a second substrate sequentially laminated on one another, and the first conductive layer and the second conductive layer are connected to the wire leading-out terminal respectively.

15. The electronic device as claimed in claim 14, wherein the electrochromic module further comprises a metal wire, and the metal wire comprises a first metal wire and a second metal wire; the first metal wire is connected to the first conductive layer, and the second metal wire is connected to the second conductive layer; the wire leading-out terminal comprises a first wire leading-out terminal connected to the first metal wire and a second wire leading-out terminal connected to the second metal wire.

16. The electronic device as claimed in claim 15, wherein the electrochromic module further comprises an adhesive frame arranged around the color-changeable material layer.

17. The electronic device as claimed in claim 16, wherein at least one of the first metal wire and the second metal wire is embedded in the adhesive frame.

18. The electronic device as claimed in claim 15, wherein the electrochromic module further comprises a flexible printed circuit board connected to the first wire leading-out terminal and the second wire leading-out terminal, and the first wire leading-out terminal and the second wire leading-out terminal are arranged in a non-coplanar manner.

19. The electronic device as claimed in claim 18, wherein the housing assembly further comprises a camera decorative member embedded in the through-hole region, at least a portion of the camera decorative member being made of metal; wherein the flexible printed circuit board and the metal portion of the camera decorative member are grounded and conductively connected to each other.

20. The electronic device as claimed in claim 11, wherein the housing assembly further comprises a camera decorative member; wherein the transparent housing comprises a first surface and a second surface arranged opposite to each other;
wherein the electrochromic module is attached to the first surface, the camera decorative member penetrates the transparent housing and is embedded in the through-hole region, two opposite sides of the camera decorative member are exposed to the first surface and the second surface respectively, and the electrochromic module is connected to one side of the camera decorative member exposed to the first surface through the flexible printed circuit board.
